# EUROPEAN PATENT APPLICATION

(11) **EP 4 275 966 A1**
(43) Date of publication of application: **15.11.2023**
(21) Application number: 21917723.5
(22) Date of filing: 24.12.2021
(51) Int. Cl.: B60R 19/04

(54) **STRUCTURAL MEMBER**

(30) Priority: 07.01.2021 JP 2021001197
(71) Applicant: NIPPON STEEL CORPORATION, Chiyoda-ku Tokyo 100-8071 (JP)
(72) Inventor: ONO, Atsushi, Tokyo 100-8071 (JP)
(74) Representative: Zimmermann & Partner Patentanwälte mbB
(86) International application number: PCT/JP2021/048378
(87) International publication number: WO 2022/149503

(57) **Abstract**

A structural member (100) includes a first member (10), a second member (20), and resin (30). The first member (10) includes a top plate (11), vertical walls (121, 122), flanges (131, 132), and ridge portions (151, 152). The second member (20) includes a top plate (21), vertical walls (221, 222), flanges (231, 232), and ridge portions (251, 252). The vertical walls (221, 222) of the second member (20) are disposed along the vertical walls (121, 122) of the first member (10) inside of the vertical walls (121, 122). The flanges (231, 232) of the second member (20) are joined to the flanges (131, 132) of the first member (10), respectively. The resin (30) is filled in between the vertical walls (221, 222) of the second member (20).

## Description

### TECHNICAL FIELD

The present disclosure relates to a structural member, and more particularly to a structural member for a mobile body having an elongated shape.

### BACKGROUND ART

Whereas a structural member used for a mobile body, such as an automobile, is required to have a reduced weight from a viewpoint of increasing fuel efficiency, for example, the structural member is also required to have crash resistance. For example, the bumper reinforcement of an automobile, which is one kind of the structural member, is installed at the front portion or the rear portion of a vehicle body, and absorbs impact by bending deformation when the bumper reinforcement receives a crash load from the front side or the rear side of the vehicle body. The bumper reinforcement is required to bear a large load with a small amount of deformation.

Patent Literature 1 proposes a bumper reinforcement having a shape that suppresses deformation at the time of a crash. The bumper reinforcement disclosed in Patent Literature 1 includes a first member and a second member. The first member has a hat-shaped transverse cross section. The second member is a closing plate that closes an opening of the first member. Each of the first member and the second member includes a top plate, two vertical walls, and two flanges. The vertical walls of the second member are disposed to face the vertical walls of the first member inside of the first member. The top plate of the second member includes a protruding portion that protrudes in the direction opposite to the top plate of the first member.

According to Patent Literature 1, when a crash load is input to the bumper reinforcement from the direction of the second member, thus causing bending deformation in the bumper reinforcement, of the respective vertical walls of the first member, end portions close to the second member move toward the center of the bumper reinforcement in the vehicle height direction. That is, in the first member, deformation occurs in which both vertical walls tilt inward. However, in the bumper reinforcement disclosed in Patent Literature 1, when bending deformation occurs, of the top plate of the second member, portions other than the protruding portion move toward both vertical walls of the first member and hence, it is possible to suppress tilting of both vertical walls of the first member.

### CITATION LIST

### PATENT LITERATURE

Patent Literature 1: Japanese Patent No. 6485606

### SUMMARY OF INVENTION

### TECHNICAL PROBLEM

As described in Patent Literature 1, when a crash load is input to the bumper reinforcement from the direction of the second member, which is the closing plate, the first member deforms such that both vertical walls tilt inward. When such deformation further progresses, cross-sectional collapse (plastic deformation) of the bumper reinforcement occurs, so that the withstand load of the bumper reinforcement decreases considerably.

In the structural member, such as the bumper reinforcement, that absorbs impact at the time of a crash, the magnitude of the withstand load depends on the product of the height in transverse cross section (the length in the direction in which a load is input) and stress generated in each region. Therefore, in the case in which the height of the structural member in transverse cross section reduces at an early stage of a crash, the maximum load that the structural member can bear (the load that causes plastic deformation) is small and hence, the structural member easily plastically deforms. The structural member is required to suppress a reduction in height in transverse cross section at the time of a crash and to increase withstand load performance.

An objective of the present disclosure is to provide a structural member for a mobile body being capable of increasing withstand load performance.

### SOLUTION TO PROBLEM

A structural member according to the present disclosure is a structural member for a mobile body, and has an elongated shape. The structural member includes a first member, a second member, and resin. Each of the first member and the second member extends in a longitudinal direction of the structural member. The first member includes a first top plate, a pair of first vertical walls, a pair of first flanges, and a pair of first ridge portions. The first vertical walls are disposed to face each other, and end edges of the first vertical walls are connected to each other by the first top plate. The first flanges are disposed opposite to the first top plate with respect to the first vertical walls, and protrude outward relative to the first vertical walls. The first ridge portions connect the first vertical walls and the first flanges. The second member includes a second top plate, a pair of second vertical walls, a pair of second flanges, and a pair of second ridge portions. The second top plate is disposed inside of the first vertical walls, and faces the first top plate with a space between the second top plate and the first top plate. The second vertical walls are disposed along the first vertical walls inside of the first vertical walls, and end edges of the second vertical walls are connected to each other by the second top plate. The second flanges are disposed opposite to the second top plate with respect to the second vertical walls, and protrude outward relative to the second vertical walls. The second flanges are joined to the first flanges. The second ridge portions connect the second vertical walls and the second flanges. The resin is filled in between the second vertical walls.

### ADVANTAGEOUS EFFECT OF INVENTION

According to the structural member for a mobile body according to the present disclosure, it is possible to increase withstand load performance.

### BRIEF DESCRIPTION OF DRAWINGS

[FIG. 1] FIG. 1 is a schematic view of a structural member according to a first embodiment.
[FIG. 2] FIG. 2 is a transverse cross-sectional view of the structural member according to the first embodiment.
[FIG. 3] FIG. 3 is a transverse cross-sectional view of a structural member according to a second embodiment.
[FIG. 4] FIG. 4 is a schematic view for describing basic conditions of a three-point bending test in a first example.
[FIG. 5] FIG. 5 is a transverse cross-sectional view of a structural member according to Comparative Example 1.
[FIG. 6] FIG. 6 is a transverse cross-sectional view of a structural member according to Comparative Example 2.
[FIG. 7] FIG. 7 is a transverse cross-sectional view of a structural member according to Comparative Example 3.
[FIG. 8] FIG. 8 shows load-displacement curves obtained by performing the three-point bending test in the first example.
[FIG. 9] FIG. 9 shows load/weight-displacement curves obtained by performing the three-point bending test in the first example.
[FIG. 10] FIG. 10 shows load/weight-displacement curves obtained by performing a simulation of a three-point bending test in a second example.
[FIG. 11] FIG. 11 shows load/weight-displacement curves obtained by performing a simulation of a three-point bending test in a third example.
[FIG. 12] FIG. 12 shows load/weight-displacement curves obtained by performing a simulation of a three-point bending test in a fourth example.
[FIG. 13] FIG. 13 shows other load/weight-displacement curves obtained by performing a simulation of the three-point bending test in the fourth example.
[FIG. 14] FIG. 14 shows load/weight-displacement curves obtained by performing a simulation of a three-point bending test in a fifth example.
[FIG. 15] FIG. 15 shows load/weight-displacement curves obtained by performing a simulation of a three-point bending test in a sixth example.
[FIG. 16] FIG. 16 shows other load/weight-displacement curves obtained by performing a simulation of the three-point bending test in the sixth example.
[FIG. 17] FIG. 17 shows load/weight-displacement curves obtained by performing a three-point bending test in a seventh example.

### DESCRIPTION OF EMBODIMENTS

A structural member according to an embodiment is a structural member for a mobile body, and has an elongated shape. The structural member includes a first member, a second member, and resin. Each of the first member and the second member extends in a longitudinal direction of the structural member. The first member includes a first top plate, a pair of first vertical walls, a pair of first flanges, and a pair of first ridge portions. The first vertical walls are disposed to face each other, and end edges of the first vertical walls are connected to each other by the first top plate. The first flanges are disposed opposite to the first top plate with respect to the first vertical walls, and protrude outward relative to the first vertical walls. The first ridge portions connect the first vertical walls and the first flanges. The second member includes a second top plate, a pair of second vertical walls, a pair of second flanges, and a pair of second ridge portions. The second top plate is disposed inside of the first vertical walls, and faces the first top plate with a space between the second top plate and the first top plate. The second vertical walls are disposed along the first vertical walls inside of the first vertical walls, and end edges of the second vertical walls are connected to each other by the second top plate. The second flanges are disposed opposite to the second top plate with respect to the second vertical walls, and protrude outward relative to the second vertical walls. The second flanges are joined to the first flanges. The second ridge portions connect the second vertical walls and the second flanges. The resin is filled in between the second vertical walls (first configuration).

In the structural member according to the first configuration, the second vertical walls of the second member are disposed along the first vertical walls of the first member inside of the first vertical walls. Further, the resin is filled in between the second vertical walls of the second member. Therefore, when a crash load is input to the structural member from the direction of the second member, so that the first vertical walls tend to tilt toward the inside of the first member, it is possible to suppress tilting of the first vertical walls by the second vertical walls and the resin. For this reason, at the time of a crash of the mobile body, a reduction in height of the structural member in transverse cross section (length in the direction in which a load is input) is suppressed. As a result, it is possible to increase the maximum load that the structural member can bear. Accordingly, it is possible to increase withstand load performance of the structural member against a crash load from the direction of the second member.

According to the first configuration, the resin is used as a filler filled in between the second vertical walls of the second member. Therefore, it is possible to increase withstand load performance of the structural member without considerably increasing the weight of the structural member.

It is preferable that a size of each gap formed between the first vertical walls and the second vertical walls be 2.0 mm or less (second configuration).

According to the second configuration, the second vertical walls of the second member are disposed sufficiently proximate to the first vertical walls of the first member. Therefore, it is possible to more effectively suppress tilting of the first vertical walls toward the inside of the first member. Accordingly, it is possible to further increase withstand load performance of the structural member against a crash load from the direction of the second member.

It is preferable that a filling height of the resin be equal to or higher than positions of ends of the second ridge portions close to the second vertical walls (third configuration).

According to the third configuration, the resin is filled in between the second vertical walls to a sufficient height, that is, to the position of the ends of the second ridge portions close to the second vertical walls, or to exceed the ends of the second ridge portions close to the second vertical walls. With such a configuration, when a crash load is input to the structural member from the direction of the second member, it is possible to more effectively suppress tilting of the first vertical walls of the first member. Accordingly, it is possible to further increase withstand load performance of the structural member against a crash load from the direction of the second member.

The second top plate may include a protruding portion. The protruding portion protrudes in a direction opposite to the first top plate, for example, and extends in the longitudinal direction of the structural member (fourth configuration).

According to the fourth configuration, the second top plate of the second member is provided with the protruding portion that protrudes in the direction opposite to the first top plate of the first member. With such a configuration, it is possible to reduce the amount of the resin filled in between the second vertical walls, thus achieving a reduction in weight of the structural member. Accordingly, it is possible to increase the maximum load per unit weight that the structural member can bear when a crash load is input from the direction of the second member.

It is preferable that, assuming a length of the protruding portion as w2 and a distance between the first vertical walls as W1 in a direction in which the first vertical walls face each other, w2/W1 be 1/2 or more and 7/8 or less (fifth configuration).

According to the fifth configuration, in the direction in which the first vertical walls of the first member face each other, that is, in a width direction of the structural member, the length of the protruding portion is appropriately set with respect to the distance between the first vertical walls. In this case, it is possible to further increase the maximum load per unit weight that the structural member can bear when a crash load is input from the direction of the second member.

It is preferable that, assuming a height of the second vertical walls as H2 and a height of the first vertical walls as H1 in a direction perpendicular to both the longitudinal direction of the structural member and the direction in which the first vertical walls face each other, H2/H1 be more than 1/12 (sixth configuration). H2/H1 may be set to 1/2 or less (seventh configuration).

According to the sixth or seventh configuration, in the direction perpendicular to both the longitudinal direction of the structural member and the direction in which the first vertical walls of the first member face each other, the ratio of the height of the second vertical wall to the height of the first vertical wall is appropriately set. With such a configuration, it is possible to further increase the maximum load that the structural member can bear when a crash load is input from the direction of the second member.

The resin may be contiguously filled in between the second vertical walls over an overall length of the second member (eighth configuration).

In the structural member according to the eighth configuration, the resin is contiguously filled in between the second vertical walls over the overall length of the second member. Therefore, irrespective of the portion to which a crash load is input, it is possible to suppress inward tilting of the first vertical walls of the first member.

The resin may be filled in between the second vertical walls at a portion of the second member in the longitudinal direction (ninth configuration).

In the structural member according to the ninth configuration, the resin is filled in between the second vertical walls at a portion of the second member. That is, in the longitudinal direction of the structural member, there are a portion where the resin is present and a portion where the resin is not present. In this case, when a crash load is input to the structural member from the direction of the second member, in the structural member, it is possible to cause the portion where the resin is not present to deform prior to the portion where the resin is present.

Hereinafter, embodiments of the present disclosure will be described with reference to drawings. In respective drawings, identical or corresponding components are given the same reference symbols, and the same description will not be repeated.

### <First embodiment>

### [Overall configuration]

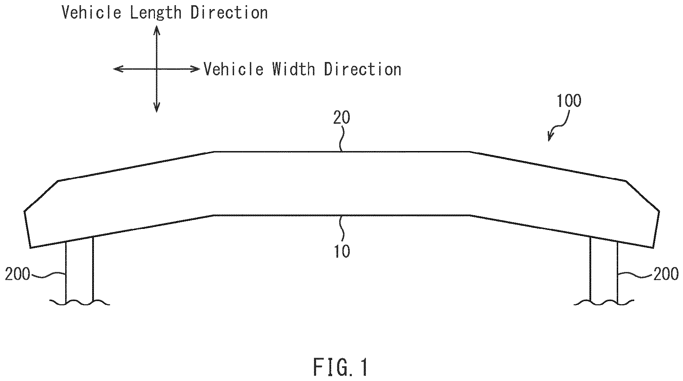

FIG. 1 is a schematic view of a structural member 100 for a mobile body according to the present embodiment. Although not particularly limited, an example of the mobile body includes an automobile. The structural member 100 is used as a member that forms the vehicle body of the automobile, for example. In this case, the structural member 100 may be a bumper reinforcement. In the present embodiment, the description will be made for an example in which the structural member 100 is a bumper reinforcement.

As shown in FIG. 1, the structural member 100 has an elongated shape. The structural member 100 is installed at the front portion or the rear portion of the vehicle body, and extends in substantially a vehicle width direction. In the example shown in FIG. 1, the structural member 100 bends to protrude toward the outside of the vehicle body in the vehicle length direction.

The structural member 100 includes a first member 10 and a second member 20. Each of the first member 10 and the second member 20 extends in the longitudinal direction of the structural member 100. That is, each of the first member 10 and the second member 20 extends in the vehicle width direction. The length of the first member 10 is substantially equal to the length of the second member 20, for example. However, there may be a slight difference between the length of the first member 10 and the length of the second member 20.

The second member 20 is disposed on the outer side of the vehicle body relative to the first member 10. In the case in which the structural member 100 is a bumper reinforcement that is installed at the front portion of the vehicle body, the second member 20 is disposed forward of the first member 10. In the case in which the structural member 100 is a bumper reinforcement that is installed at the rear portion of the vehicle body, the second member 20 is disposed rearward of the first member 10. Both end portions of the first member 10 in the vehicle width direction are supported by crash boxes 200, for example.

### [Detailed configuration]

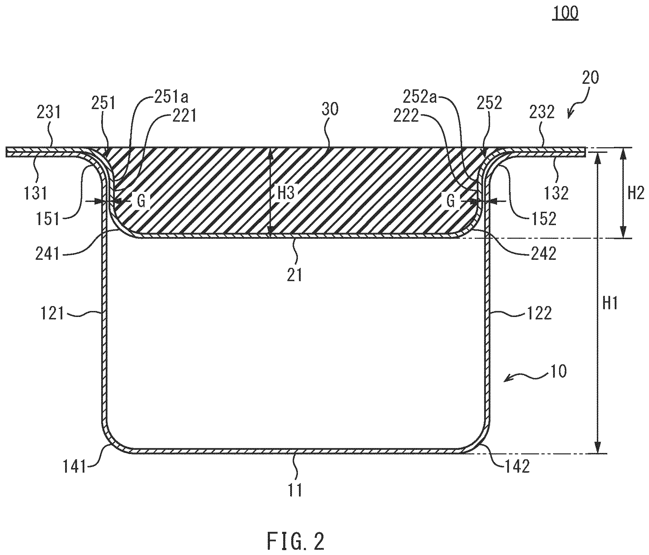

Next, the configuration of the structural member 100 will be described in more detail with reference to FIG. 2. FIG. 2 is a transverse cross-sectional view of the structural member 100. The transverse cross section of the structural member 100 is a cross section of the structural member 100 taken along a plane substantially perpendicular to the longitudinal direction. Hereinafter, there may be a case in which the configuration of the structural member 100 is described by referring to the up and down direction on the paper on which FIG. 2 is drawn as the up and down direction or the height direction of the structural member 100 and by referring to the direction orthogonal to the up and down direction on the paper on which FIG. 2 is drawn as the width direction. The up and down direction and the width direction substantially match the vehicle length direction and the vehicle height direction, respectively, of the vehicle body on which the structural member 100 is installed.

### (First member)

Referring to FIG. 2, the first member 10 has a substantially-hat-shaped transverse cross section. The first member 10 includes a top plate 11, a pair of vertical walls 121, 122, and a pair of flanges 131, 132. The first member 10 further includes a pair of ridge portions 141, 142 and a pair of ridge portions 151, 152.

The top plate 11 is the portion of the structural member 100 that is disposed at the innermost portion of the vehicle body. The end edges of the vertical walls 121, 122 are connected to each other by the top plate 11. The vertical walls 121, 122 protrude upward from the top plate 11. In the example shown in FIG. 2, the vertical walls 121, 122 are disposed substantially along the up and down direction (vehicle length direction). However, the vertical walls 121, 122 may be slightly tilted with respect to the up and down direction.

The vertical walls 121, 122 face each other. That is, the vertical walls 121, 122 are disposed such that one surface of the vertical wall 121 faces one surface of the vertical wall 122 in the width direction of the structural member 100. The ridge portion 141 connects the top plate 11 to the vertical wall 121, and the ridge portion 142 connects the top plate 11 to the vertical wall 122. One vertical wall 121 is connected to the top plate 11 via the ridge portion 141. The other vertical wall 122 is connected to the top plate 11 via the ridge portion 142 opposite to the vertical wall 121. Each of the ridge portions 141, 142 has a substantially arc shape as viewed in a transverse cross-sectional view of the structural member 100, for example.

The flanges 131, 132 are disposed opposite to the top plate 11 with respect to the vertical walls 121, 122, and protrude outward relative to the vertical walls 121, 122. The flanges 131, 132 protrude outward in the width direction from the vertical walls 121, 122 facing each other. The flanges 131, 132 are connected to the end edges of the vertical walls 121, 122 opposite to the end edges of the vertical walls 121, 122 that are connected to each other by the top plate 11. One flange 131 is connected to one vertical wall 121 via the ridge portion 151. The other flange 132 is connected to the other vertical wall 122 via the ridge portion 152. That is, the vertical wall 121 and the flange 131 are connected by the ridge portion 151, and the vertical wall 122 and the flange 132 are connected by the ridge portion 152. The vertical wall 121 and the flange 131 may be formed as an integral body, or may be formed as separate bodies and then joined together by welding or the like. In the same manner, the vertical wall 122 and the flange 132 may be formed as an integral body, or may be formed as separate bodies and then joined together by welding or the like. Each of the ridge portions 151, 152 has a substantially arc shape as viewed in a transverse cross-sectional view of the structural member 100, for example.

The first member 10 is made of a plate-like starting material. A material of the first member 10 is metal, such as steel or aluminum, for example. The first member 10 is typically formed by pressing a metal sheet. However, the material of the first member 10 is not limited to metal. For example, carbon fiber reinforced plastic (CFRP) or the like may be selected as a material of the first member 10.

### (Second member)

The second member 20 closes an opening of the first member 10 having a substantially-hat-shaped transverse cross section, thus forming a closed cross section in conjunction with the first member 10. The second member 20 includes a top plate 21, a pair of vertical walls 221, 222, and a pair of flanges 231, 232. The second member 20 further includes a pair of ridge portions 241, 242 and a pair of ridge portions 251, 252.

The top plate 21 is disposed inward of the vertical walls 121, 122 of the first member 10. That is, the top plate 21 is disposed between the vertical wall 121 and the vertical wall 122. The top plate 21 is disposed upward of the top plate 11 of the first member 10. The top plate 21 faces the top plate 11 with a space therebetween. The top plate 21 is spaced apart from the top plate 11 to prevent contact of the top plate 21 with the top plate 11 even when deformation occurs in the structural member 100 due to a crash load.

The vertical walls 221, 222 are disposed inward of the vertical walls 121, 122 of the first member 10. The end edges of the vertical walls 221, 222 are connected to each other by the top plate 21. The vertical walls 221, 222 protrude upward from the top plate 21.

The vertical walls 221, 222 face each other. That is, the vertical walls 221, 222 are disposed such that one surface of the vertical wall 221 faces one surface of the vertical wall 222 in the width direction of the structural member 100. The ridge portion 241 connects the vertical wall 221 to the top plate 21, and the ridge portion 242 connects the vertical wall 222 to the top plate 21. One vertical wall 221 is connected to the top plate 21 via the ridge portion 241. The other vertical wall 222 is connected to the top plate 21 via the ridge portion 242 opposite to the vertical wall 221. Each of the ridge portions 241, 242 has a substantially arc shape as viewed in a transverse cross-sectional view of the structural member 100, for example.

The vertical walls 221, 222 are respectively disposed along the vertical walls 121, 122 of the first member 10 inside of the vertical walls 121, 122. The one vertical wall 221 is proximate to the one vertical wall 121 of the first member 10. The other vertical wall 222 is proximate to the other vertical wall 122 of the first member 10. The size of a gap G formed between the vertical wall 121 of the first member 10 and the vertical wall 221 of the second member 20 and the size of a gap G formed between the vertical wall 122 of the first member 10 and the vertical wall 222 of the second member 20 are preferably set to 2.0 mm or less. Each gap G is more preferably 0 mm. That is, it is preferable that the vertical walls 221, 222 be respectively in contact with the vertical walls 121, 122. In the case in which the gap G is 0 mm, the vertical walls 221, 222 may be respectively joined to the vertical walls 121, 122 by welding or the like, for example.

A vertical wall height H2 of the second member 20 is smaller than a vertical wall height H1 of the first member 10. The vertical wall height H2 is the height of the vertical walls 221, 222 in the direction substantially perpendicular to both the longitudinal direction of the structural member 100 and the direction in which the vertical walls 121, 122 of the first member 10 face each other. The height of the vertical walls 221, 222 is a length obtained by combining the length of the vertical walls 221, 222 itself in the up and down direction, the length of the ridge portions 241, 242 in the up and down direction, and the length of the ridge portions 251, 252 in the up and down direction. In the same manner, the vertical wall height H1 is the height of the vertical walls 121, 122 in the direction substantially perpendicular to both the longitudinal direction of the structural member 100 and the direction in which the vertical walls 121, 122 of the first member 10 face each other. The height of the vertical walls 121, 122 is a length obtained by combining the length of the vertical walls 121, 122 itself in the up and down direction, the length of the ridge portions 141, 142 in the up and down direction, and the length of the ridge portions 151, 152 in the up and down direction. The ratio: H2/H1 of the vertical wall height H2 to the vertical wall height H1 is preferably more than 1/12, and more preferably 1/6 or more. Further, H2/H1 is preferably 1/2 or less, and more preferably 1/3 or less.

The flanges 231, 232 are disposed opposite to the top plate 21 with respect to the vertical walls 221, 222, and protrude outward relative to the vertical walls 221, 222. The flanges 231, 232 protrude outward in the width direction from the vertical walls 221, 222 facing each other. One flange 231 is made to overlap with the one flange 131 of the first member 10, and is joined to this flange 131. The other flange 232 is made to overlap with the other flange 132 of the first member 10, and is joined to this flange 132. The flanges 231, 232 of the second member 20 are joined to the flanges 131, 132 of the first member 10 by welding, for example. Alternatively, the flanges 231, 232 may be mechanically joined to the flanges 131, 132 by rivets or the like.

The flanges 231, 232 are connected to the end edges of the vertical walls 221, 222 opposite to the end edges of the vertical walls 221, 222 that are connected to each other by the top plate 21. The one flange 231 is connected to the one vertical wall 221 via the ridge portion 251. The other flange 232 is connected to the other vertical wall 222 via the ridge portion 252. That is, the vertical wall 221 and the flange 231 are connected by the ridge portion 251, and the vertical wall 222 and the flange 232 are connected by the ridge portion 252. The vertical wall 221 and the flange 231 may be formed as an integral body, or may be formed as separate bodies and then joined together by welding or the like. In the same manner, the vertical wall 222 and the flange 232 may be formed as an integral body, or may be formed as separate bodies and then joined together by welding or the like. Each of the ridge portions 251, 252 has a substantially arc shape as viewed in a transverse cross-sectional view of the structural member 100, for example.

The ridge portions 251, 252 are respectively disposed along the ridge portions 151, 152 of the first member 10. One ridge portion 251 is proximate to the one ridge portion 151 of the first member 10. The other ridge portion 252 is proximate to the other ridge portion 152 of the first member 10. It is preferable that the size of a gap formed between the ridge portion 151 of the first member 10 and the ridge portion 251 of the second member 20 and the size of a gap formed between the ridge portion 152 of the first member 10 and the ridge portion 252 of the second member 20 be approximately 2.0 mm at maximum. It is more preferable that the ridge portions 251, 252 be respectively in contact with the ridge portions 151, 152. In this case, the ridge portions 251, 252 may be joined to the ridge portions 151, 152 by welding or the like, for example.

The second member 20 is made of a plate-like starting material. A material of the second member 20 is metal, such as steel or aluminum, for example. The second member 20 is typically formed by pressing a metal sheet. However, the material of the second member 20 is not limited to metal. For example, carbon fiber reinforced plastic (CFRP) or the like may be selected as a material of the second member 20. The material of the second member 20 may be the same as or different from the material of the first member 10. Further, the sheet thickness of the second member 20 may be the same as or different from the sheet thickness of the first member 10.

### (Resin)

The structural member 100 further includes resin 30. The resin 30 is filled in between the vertical walls 221, 222 of the second member 20. The resin 30 is provided between the vertical walls 221, 222 to fill a space formed between the vertical wall 221 and the vertical wall 222. The resin 30 is in close contact with both the vertical walls 221, 222. By pouring liquid resin into the space formed between the vertical walls 221, 222 and by curing the resin, the resin 30 can be filled in between the vertical walls 221, 222, for example.

The resin 30 may be filled in between the vertical walls 221, 222 over the overall length of the second member 20. Alternatively, the resin 30 may be filled in between the vertical walls 221, 222 at a portion of the second member 20 in the longitudinal direction. For example, the resin 30 may be provided between the vertical walls 221, 222 in a state of being dispersed in the longitudinal direction of the structural member 100.

The resin 30 is in contact with the top plate 21 and the vertical walls 221, 222 of the second member 20. A portion of the resin 30 that is not in contact with the second member 20 is released. That is, the surface of the resin 30 opposite to the top plate 21 of the second member 20 is exposed from the structural member 100.

The resin 30 has a filling height H3. The filling height H3 is the length of the resin 30 in the direction substantially perpendicular to both the longitudinal direction of the structural member 100 and the direction in which the vertical walls 121, 122 of the first member 10 face each other. More specifically, the filling height H3 is the distance in the height direction from the lower surface of the top plate 21 (the surface on the first member 10 side) to the upper surface of the resin 30. The filling height H3 is preferably set to a height higher than the position of ends 251a, 252a of the ridge portions 251, 252 close to the vertical walls 221, 222. That is, it is preferable that the resin 30 be filled in between the vertical walls 221, 222 in a region from the top plate 21 to the position of the ends 251a, 252a, which are lower curve-end positions of the ridge portions 251, 252, or to exceed the ends 251a, 252a.

For example, the filling height H3 of the resin 30 may be set to 50% or more of the vertical wall height H2 of the second member 20 (H3/H2 ≥ 0.50). It is preferable that the filling height H3 of the resin 30 be 75% or more of the vertical wall height H2 of the second member 20 (H3/H2 ≥ 0.75). The filling height H3 may be the vertical wall height H2 or more. The filling height H3 may be set to 150% or less of the vertical wall height H2, for example (H3/H2 ≤ 1.50).

For the resin 30, resin having preferable physical properties may be suitably selected. From a viewpoint of suppressing deformation of the structural member 100, it is preferable that the resin 30 have a compressive modulus of 118 MPa or more, for example. From a viewpoint of a reduction in weight of the structural member 100, it is also preferable that the density of the resin 30 be relatively low, for example. The expansion ratio of the resin 30 is, for example, ten times or less, and is preferably five times or less.

### [Advantageous effect]

The structural member 100 according to the present embodiment has excellent withstand load performance against a crash load from the direction of the second member 20. In more detail, in the structural member 100 according to the present embodiment, the vertical walls 221, 222 of the second member 20 are disposed along the vertical walls 121, 122 of the first member 10 inside of the vertical walls 121, 122. Further, the resin 30 is filled in between the vertical walls 221, 222 of the second member 20. Due to the vertical walls 221, 222 and the resin 30, when a crash load is input to the structural member 100 from the direction of the second member 20, so that the vertical walls 121, 122 of the first member 10 tend to tilt inward in the width direction, it is possible to suppress tilting of the vertical walls 121, 122. As a result, at the time of a crash of the mobile body, which is an automobile, for example, a reduction in height of the structural member 100 in transverse cross section is suppressed, and it is possible to increase the maximum load that the structural member 100 can bear. Accordingly, at the time of a crash, it is possible to prevent cross-sectional collapse of the structural member 100 from occurring before deformation of the crash box 200 is completed, for example.

In the structural member 100 according to the present embodiment, the resin 30 is filled in between the vertical walls 221, 222 of the second member 20. Therefore, compared with the case in which metal or the like, for example, is used as a filler that is filled in between the vertical walls 221, 222, it is possible to reduce the degree of increase in the weight of the structural member 100. Accordingly, it is possible to suppress an increase in the weight of the structural member 100 and to increase withstand load performance of the structural member 100.

For example, in the case in which the entire surface of the resin 30 is covered by closing an opening of the second member 20 by a plate material, although the weight of the structural member increases, the maximum load that the structural member can bear does not increase significantly. Therefore, it is not possible to efficiently increase the maximum load of the structural member. In contrast, in the present embodiment, the surface of the resin 30 that is not in contact with the second member 20 is released without being covered by a plate material or the like. Therefore, with the configuration of the present embodiment, it is possible to efficiently increase the maximum load of the structural member 100. It is preferable that the entire surface of the resin 30 that is not in contact with the second member 20 be released. However, the surface of the resin 30 that is not in contact with the second member 20 may be partially released.

In the present embodiment, the size of the gap G formed between the vertical wall 121 of the first member 10 and the vertical wall 221 of the second member 20 and the size of the gap G formed between the vertical wall 122 of the first member 10 and the vertical wall 222 of the second member 20 are preferably set to 2.0 mm or less. With such setting, the vertical walls 221, 222 of the second member 20 are respectively disposed sufficiently proximate to the vertical walls 121, 122 of the first member 10. Therefore, when a crash load is input to the structural member 100 from the direction of the second member 20, it is possible to more effectively suppress tilting of the vertical walls 121, 122 of the first member 10. Accordingly, it is possible to further increase withstand load performance of the structural member 100 against a crash load from the direction of the second member 20.

In the present embodiment, the ridge portions 251, 252 of the second member 20 close to the flanges 231, 232 are disposed along the ridge portions 151, 152 of the first member 10 close to the flanges 131, 132. With such a configuration, it is possible to reinforce the ridge portions 151, 152 of the first member 10 by the ridge portions 251, 252 of the second member 20. Therefore, when a crash load is input to the structural member 100 from the direction of the second member 20, it is possible to suppress occurrence of folding deformation in the ridge portions 151, 152 of the first member 10. Accordingly, it is possible to prevent withstand load performance of the structural member 100 from decreasing due to folding deformation of the ridge portions 151, 152.

In the present embodiment, the filling height H3 of the resin 30 is preferably equal to or higher than the position of the ends 251a, 252a of the ridge portions 251, 252 of the second member 20 close to the vertical walls 221, 222. By ensuring a sufficient filling height H3 of the resin 30 as described above, it is possible to more effectively suppress tilting of the vertical walls 121, 122 of the first member 10 when a crash load is input to the structural member 100 from the direction of the second member 20. Accordingly, it is possible to further increase withstand load performance of the structural member 100 against a crash load from the direction of the second member 20.

In the present embodiment, the ratio: H2/H1 of the vertical wall height H2 of the second member 20 to the vertical wall height H1 of the first member 10 is preferably more than 1/12, and is more preferably 1/6 or more. With such a configuration, it is possible to further increase the maximum load that the structural member 100 can bear when a crash load is input from the direction of the second member 20.

Further, H2/H1 is preferably 1/2 or less, and is more preferably 1/3 or less. With such a configuration, it is possible to further increase the maximum load that the structural member 100 can bear when a crash load is input from the direction of the second member 20.

In the present embodiment, the resin 30 may be contiguously filled in between the vertical walls 221, 222 over the overall length of the second member 20. In this case, irrespective of the longitudinal position of the portion of the structural member 100 to which a crash load is input, it is possible to suppress tilting of the vertical walls 121, 122 of the first member 10. Accordingly, it is possible to cause the entire structural member 100 to exhibit high withstand load performance against a crash load from the direction of the second member 20.

In the present embodiment, the resin 30 may be filled in between the vertical walls 221, 222 at a portion of the second member 20 in the longitudinal direction. For example, in the longitudinal direction of the structural member 100, the resin 30 may be disposed at a plurality of portions in a dispersed manner. In the case in which the resin 30 is filled in between the vertical walls 221, 222 at a portion of the second member 20, it is possible to cause the portion where the resin 30 is not present to deform prior to other portions when a crash load is input to the structural member 100 from the direction of the second member 20. In the case in which the structural member 100, for example, has a portion that is intended to have reduced withstand load performance, the resin 30 is not disposed between the vertical walls 221, 222 at such a portion, and the resin 30 is disposed at other portions. With such a configuration, irrespective of the position to which a crash load is input, it is possible to always cause a portion of the structural member 100 at which the resin 30 is not disposed to deform.

In the present embodiment, the resin 30 has a compressive modulus of 118 MPa or more, for example. With such a configuration, when a crash load is input to the structural member 100 from the direction of the second member 20, it is possible to more effectively suppress deformation in which the vertical walls 121, 122 of the first member 10 tilt inward in the width direction. In the case in which the compressive modulus of the resin 30 is 118 MPa or more, it is preferable that the first member 10 be formed of a metal sheet having tensile strength of 1470 MPa or more, and it is preferable that the sheet thickness of the first member 10 be 0.5 mm or more and 2.6 mm or less. In the case in which the compressive modulus of the resin 30 is 118 MPa or more, it is preferable that the second member 20 be formed of a metal sheet having tensile strength of 980 MPa or more, and it is preferable that the sheet thickness of the second member 20 be 0.5 mm or more and 2.6 mm or less.

### <Second embodiment>

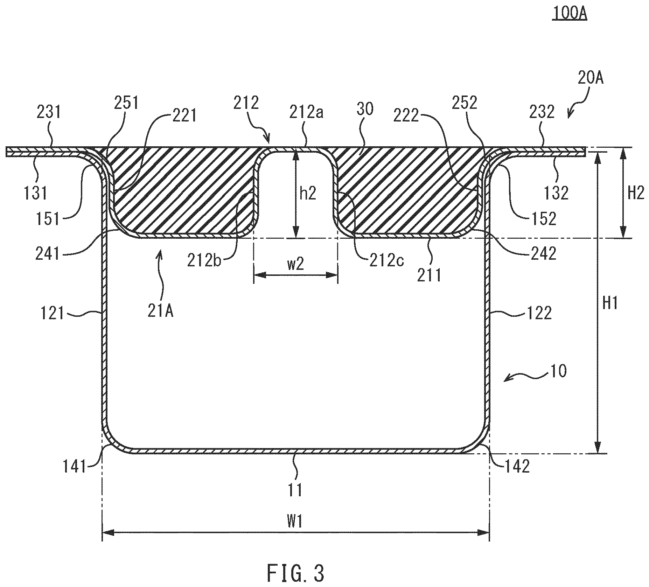

FIG. 3 is a transverse cross-sectional view of a structural member 100A according to a second embodiment. The structural member 100A has a configuration substantially equivalent to the configuration of the structural member 100 according to the first embodiment. However, the structural member 100A differs from the structural member 100 according to the first embodiment in a configuration of a top plate 21A of a second member 20A.

As shown in FIG. 3, the top plate 21A of the second member 20A includes a body portion 211 and a protruding portion 212. The protruding portion 212 protrudes from the body portion 211 in the direction opposite to the top plate 11 of the first member 10. The protruding portion 212 extends in the longitudinal direction of the structural member 100A. The protruding portion 212 may extend over the overall length of the second member 20A, or may be provided to only a portion of the second member 20A in the longitudinal direction of the structural member 100A.

The protruding portion 212 includes a top portion 212a and side portions 212b, 212c. The top portion 212a is disposed opposite to the top plate 11 of the first member 10 with respect to the body portion 211. The side portions 212b, 212c connect the top portion 212a to the body portion 211.

In the same manner as the first embodiment, the resin 30 is filled in between the vertical walls 221, 222 of the second member 20. The resin 30 is in close contact with the side portions 212b, 212c of the protruding portion 212 in addition to the vertical walls 221, 222 of the second member 20. Although the entire protruding portion 212 may be covered by the resin 30, it is preferable that the top portion 212a of the protruding portion 212 be exposed from the resin 30. In the case in which the top portion 212a of the protruding portion 212 is exposed from the resin 30, when a crash load is input to the structural member 100A from the direction of the second member 20A, the protruding portion 212 mainly receives the crash load, so that the load input to the resin 30 is reduced. With such a configuration, rupture of the resin 30 is suppressed and hence, it is possible to maintain a high withstand load performance of the structural member 100A. Further, due to the protruding portion 212 receiving the crash load, the structural member 100A deforms to sandwich the resin 30 between the side portions 212b, 212c of the protruding portion 212 and the vertical walls 221, 222 and hence, it is possible to suppress separation of the resin 30 from the second member 20.

In the present embodiment, the protruding portion 212 is present between the vertical walls 221, 222. Therefore, the amount of the resin 30 filled in between the vertical walls 221, 222 is smaller than that in the first embodiment by the volume corresponding to the protruding portion 212. Accordingly, it is possible to further reduce the weight of the structural member 100A. It is also possible to further increase the maximum load per unit weight that the structural member 100A can bear when a crash load is input from the direction of the second member 20A.

It is preferable that the ratio: w2/W1 of a width w2 of the protruding portion 212 to a width W1 of the first member 10 be 1/2 or more, for example. It is also preferable that w2/W1 be 7/8 or less, for example. The width w2 is the length of the protruding portion 212 in the direction in which the vertical walls 121, 122 of the first member 10 face each other. In contrast, the width W1 is the distance between the vertical walls 121, 122 in the direction in which the vertical walls 121, 122 of the first member 10 face each other. More specifically, the width W1 is the maximum distance from the outer surface of the one vertical wall 121 to the outer surface of the other vertical wall 122 in the width direction of the structural member 100. By setting the width w2 of the protruding portion 212 as described above, it is possible to cause the structural member 100A to exhibit more excellent withstand load performance when a crash load is input from the direction of the second member 20A.

It is preferable that the ratio: h2/H2 of a height h2 of the protruding portion 212 to the vertical wall height H2 of the second member 20 be set to 7/8 or more, for example. The height h2 is the length of the protruding portion 212 in the direction perpendicular to both the longitudinal direction of the structural member 100A and the direction in which the vertical walls 121, 122 of the first member 10 face each other. In the present embodiment, the height h2 of the protruding portion 212 is the distance in the height direction from the lower surface of the body portion 211 to the upper surface of the top portion 212a. By setting the height h2 of the protruding portion 212 as described above, it is possible to cause the structural member 100A to exhibit more excellent withstand load performance when a crash load is input from the direction of the second member 20A.

In the present embodiment, a single protruding portion 212 is provided to the top plate 21A of the second member 20A. However, a plurality of protruding portions 212 arranged in the width direction of the structural member 100A may be provided to the top plate 21A. In the case in which the plurality of protruding portions 212 are provided to the top plate 21A, it is preferable that the total of the widths of the respective protruding portions 212 be 1/2 or more and 7/8 or less of the width W1 of the first member 10. The plurality of protruding portions 212 may have the same width or different widths.

In the case in which the plurality of protruding portions 212 are provided to the top plate 21A, the plurality of protruding portions 212 may have the same height or different heights. In this case, it is preferable that at least one protruding portion 212 have a height that is 7/8 or more of the vertical wall height H2 of the second member 20.

The embodiments according to the present disclosure have been described heretofore. However, the present disclosure is not limited to the above-mentioned embodiments, and various modifications are conceivable without departing from the gist of the present disclosure.

### EXAMPLES

Hereinafter, the present disclosure will be described in more detail with reference to examples. However, the present disclosure is not limited to the following examples.

### [First example]

To confirm advantageous effects of the structural member for an automobile according to the present disclosure, a three-point bending test was performed on the structural member 100 having the configuration shown in FIG. 1 and FIG. 2. In this test, the first member 10 was formed of a steel sheet having a tensile strength of 1470 MPa and a sheet thickness of 1.6 mm. The second member 20 was formed of a steel sheet having a tensile strength of 1470 MPa and a sheet thickness of 1.0 mm. The resin 30 was formed using a two-liquid urethane resin material expanded by three times. The dimensions of the respective components of the structural member 100 are shown below.
Vertical wall height H1 of first member 10: 60.0 mm
Width W1 of first member 10: 80.0 mm
Vertical wall height H2 of second member 20: 16.0 mm
Ratio of filling height H3 of resin 30 to vertical wall height H2: 100%

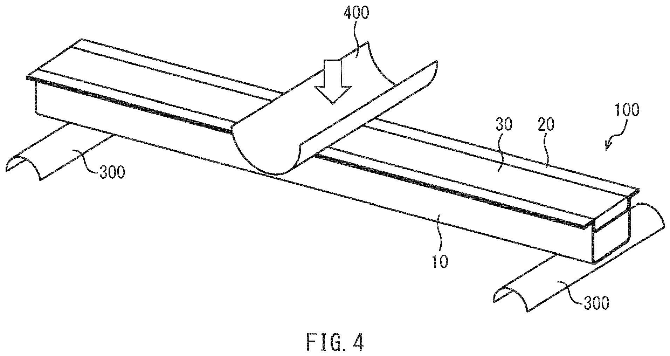

FIG. 4 is a schematic view for describing basic conditions of the three-point bending test in the present example. As shown in FIG. 4, in the three-point bending test, the structural member 100, with the second member 20 and the resin 30 facing upward, was supported by two fulcrums 300, and an impactor 400 was pushed from above against the center portion of the structural member 100 in the longitudinal direction. The distance between the fulcrums 300 was set to 700.0 mm, the radius of curvature of each fulcrum 300 was set to 25.0 mm, the radius of curvature of the impactor 400 was set to 50.0 mm, and the crush speed of the impactor 400 was set to 1.0 mm/s.

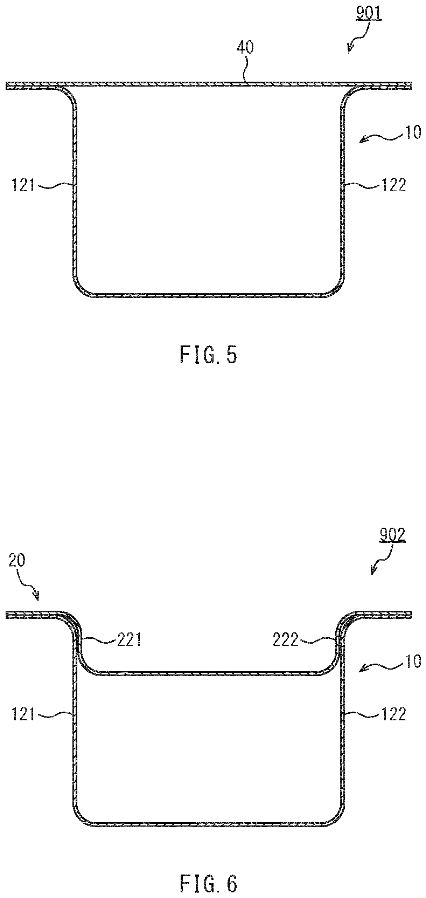

For the comparison, a three-point bending test substantially the same as the three-point bending test performed on the structural member 100 was also performed on structural members having configurations different from the configuration of the structural member 100. FIG. 5 to FIG. 7 are transverse cross-sectional views of structural members 901 to 903 according to Comparative Examples 1 to 3, respectively.

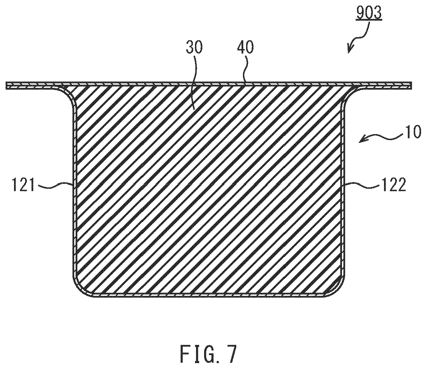

As shown in FIG. 5 and FIG. 7, the structural member 901 according to Comparative Example 1 and the structural member 903 according to Comparative Example 3 include a first member 10 similar to the structural member 100, but a second member 40 is a flat metal sheet in the structural members 901 and 903. Unlike the second member 20 of the structural member 100, each of the second members 40 of the structural members 901, 903 does not include a pair of vertical walls extending along the vertical walls 121, 122 of the first member 10. In the structural member 903 according to Comparative Example 3, resin 30 is filled in a closed space defined by the first member 10 and the second member 40. As shown in FIG. 6, the structural member 902 according to Comparative Example 2 includes a first member 10 and a second member 20 similar to the structural member 100, but resin is not provided between vertical walls 221, 222 of the second member 20 in the structural member 902.

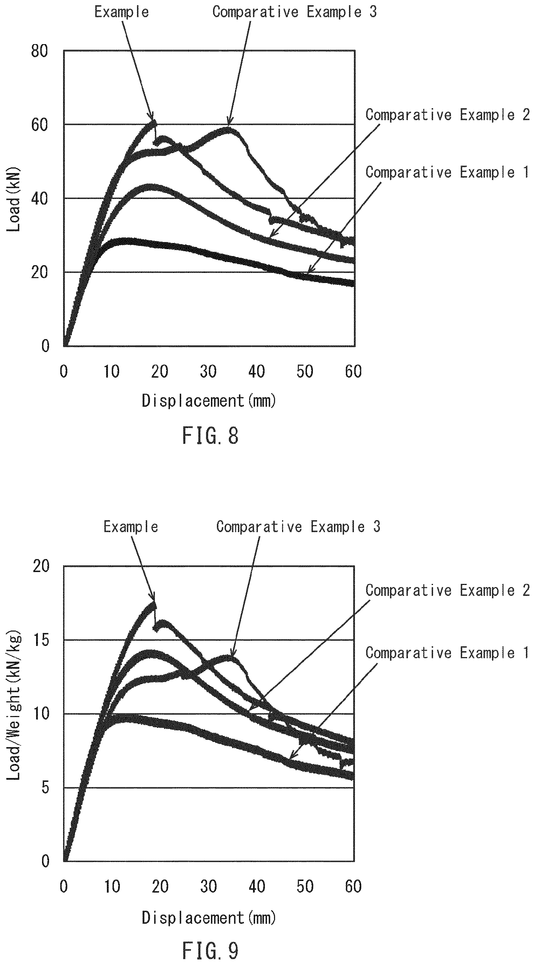

FIG. 8 shows load-displacement curves obtained by performing the three-point bending test on the structural member 100 according to the example and on the structural members 901, 902, 903 according to Comparative Examples 1 to 3. FIG. 9 shows load/weight-displacement curves obtained by performing the three-point bending test in the example and Comparative Examples 1 to 3. FIG. 9 shows the relationship between a load per unit weight (weight kg) and displacement of the impactor in the example and Comparative Examples 1 to 3.

In the structural member 100 according to the example, the resin 30 is filled in between the vertical walls 221, 222 of the second member and hence, as shown in FIG. 8, the maximum load was remarkably larger than those of the structural members 901, 902 according to Comparative Example 1 and Comparative Example 2 in which the resin is not present. In the example, the amount of energy absorption, obtained by performing integration on a load in the load-displacement curve, was also larger than those in Comparative Example 1 and Comparative Example 2. Further, when the example is compared with Comparative Example 3, displacement of the impactor 400 (the amount of intrusion) at the maximum load was smaller in the example. From such results, it can be said that the structural member 100 of the example can bear a large load when a crash load is input from the direction of the second member 20, and the structural member 100 of the example can receive a load at a stage in which the amount of intrusion into the structural member 100 is small.

As shown in FIG. 9, in the example, the maximum load per unit weight that the structural member 100 can bear was significantly larger than those in Comparative Examples 1 to 3. That is, at the time of a crash, the structural member 100 according to the example can bear a large load with a small weight. Accordingly, according to the structural member 100, it is possible to achieve both a reduction in weight and an increase in withstand load performance for when a crash load is input from the direction of the second member 20. In the example, the amount of energy absorption per unit weight was larger than those in Comparative Examples 1 to 3.

### [Second example]

A simulation of the three-point bending test was performed on structural members 100 by using commercially available structure analysis software (LS-DYNA, manufactured by ANSYS). Basic conditions of the three-point bending test were set to be the same as those in the first example. Further, the dimensions of the respective components and the material of each structural member 100 were also set to be the same as those in the first example. However, in the present example, to examine influence of the filling height H3 of the resin 30 on withstand load performance of the structural member 100, the ratio (H3/H2×100) of the filling height H3 of the resin 30 to the vertical wall height H2 of the second member 20 was changed from 25% to 100%.

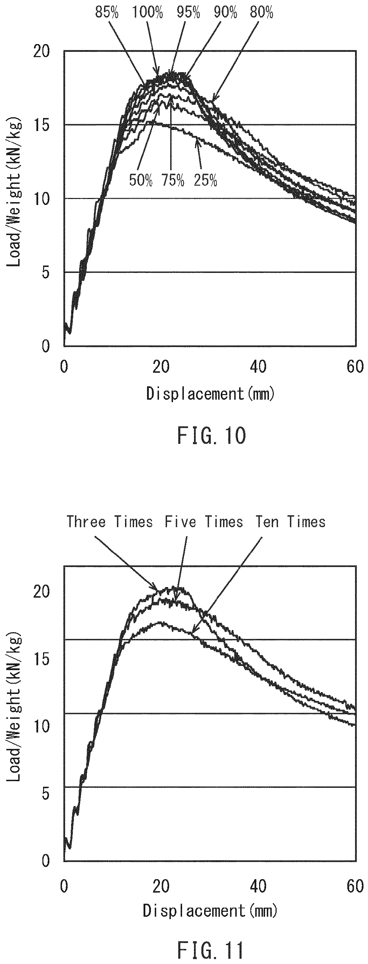

FIG. 10 shows load/weight-displacement curves obtained by performing the simulation of the three-point bending test in the present example. FIG. 10 shows the relationship between a load per unit weight and displacement of the impactor in the respective structural members 100 that differ in the ratio of the filling height H3 of the resin 30 to the vertical wall height H2 of the second member 20. As shown in FIG. 10, the maximum load per unit weight that the structural member 100 can bear increased as the filling height H3 of the resin 30 increased. In the case in which the ratio of the filling height H3 of the resin 30 to the vertical wall height H2 of the second member 20 was 50%, the maximum load was significantly larger than that in the case in which the ratio of the filling height H3 to the vertical wall height H2 was 25%. When the ratio of the filling height H3 of the resin 30 to the vertical wall height H2 of the second member 20 is 75% or more, the maximum load further increases. Accordingly, the ratio of the filling height H3 of the resin 30 to the vertical wall height H2 of the second member 20 is preferably 50% or more, and is more preferably 75% or more. As the filling height H3 of the resin 30 increased, the amount of energy absorption per unit weight also increased.

In the structural member 100 used in the present example, when the filling height H3 of the resin 30 was 75% of the vertical wall height H2 of the second member 20, the position of the upper surface of the resin 30 substantially aligned with the position of the ends 251a, 252a of the ridge portions 251, 252 close to the vertical walls 221, 222. Accordingly, it can be said that, by setting the filling height H3 of the resin 30 to be equal to or higher than the position of the ends 251a, 252a of the ridge portions 251, 252 close to the vertical walls 221, 222, it is possible to further increase withstand load performance for when a crash load is input from the direction of the second member 20.

### [Third example]

A simulation of a three-point bending test substantially the same as that in the second example was performed on structural members 100 by changing the expansion ratio of a two-liquid urethane resin material used for forming the resin 30 to three times, five times, and ten times. The dimensions of the respective components and the material of each structural member 100 are the same as those in the first example.

The density, the compressive modulus, and the yield stress of the resin 30 differ for each expansion ratio. In resin 30 in which the expansion ratio was set to three times, the density was 350 kg/m³, the compressive modulus was 190 MPa, and the yield stress was 8.5 MPa. In resin 30 in which the expansion ratio was set to five times, the density was 250 kg/m³, the compressive modulus was 118 MPa, and the yield stress was 3.3 MPa. In resin 30 in which the expansion ratio was set to ten times, the density was 110 kg/m³, the compressive modulus was 42 MPa, and the yield stress was 1.3 MPa.

FIG. 11 shows load/weight-displacement curves obtained by performing the simulation of the three-point bending test in the present example. FIG. 11 shows the relationship between a load per unit weight and displacement of the impactor in the respective structural members 100 that differ in the expansion ratio of the resin 30. As shown in FIG. 11, in the case in which the expansion ratio is three times and five times, the maximum load per unit weight is significantly larger than that in the case in which the expansion ratio is ten times. Further, in the case in which the expansion ratio was three times and five times, the amount of energy absorption per unit weight was larger than that in the case in which the expansion ratio is ten times. Accordingly, it is preferable that the expansion ratio of the resin 30 that is filled in between the vertical walls 221, 222 of the second member 20 be five times or less.

When resin is used that has a compressive modulus equivalent to the compressive modulus of the resin 30 used in the present example, that is, the resin 30 expanded by three times or five times, it is possible to obtain advantageous effects equivalent to the advantageous effects obtained by the resin 30 with respect to withstand load performance of the structural member 100. That is, the compressive modulus of the resin 30 when the expansion ratio is set to five times is 118 MPa, and the compressive modulus of the resin 30 when the expansion ratio is set to three times is 190 MPa and hence, it can be said that when the compressive modulus of the resin 30 is 118 MPa or more, it is possible to effectively increase withstand load performance for when a crash load is input from the direction of the second member 20.

### [Fourth example]

A simulation of a three-point bending test substantially the same as that in the second example was performed on structural members 100 by changing the vertical wall height H2 of the second member 20 from 3.0 mm to 35.0 mm. The dimensions of the respective components of each structural member 100 other than the vertical wall height H2, and the material of each structural member 100 are substantially the same as those in the first example.

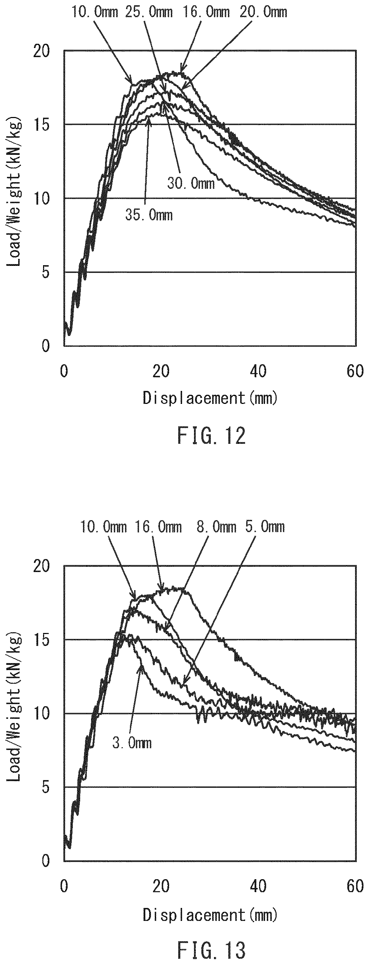

FIG. 12 and FIG. 13 show load/weight-displacement curves obtained by performing the simulation of the three-point bending test in the present example. FIG. 12 and FIG. 13 show the relationship between a load per unit weight and displacement of the impactor in the respective structural members 100 that differ in the vertical wall height H2 of the second member 20. As shown in FIG. 12, when the vertical wall height H2 was 10.0 mm to 20.0 mm, the maximum load per unit weight was substantially the same. However, when the vertical wall height H2 was 25.0 mm or 30.0 mm, the maximum load decreased slightly. When the vertical wall height H2 was 35.0 mm, the maximum load decreased remarkably. Further, the amount of energy absorption per unit weight was smaller in the case in which the vertical wall height H2 was 25.0 mm or 30.0 mm than in the case in which the vertical wall height H2 was 10.0 mm to 20.0 mm, and the amount of energy absorption per unit weight was even smaller in the case in which the vertical wall height H2 was 35.0 mm. Accordingly, in the structural members 100 used in the present example, the vertical wall height H2 of the second member 20 is preferably 30.0 mm or less, and is more preferably 20.0 mm or less. In the present example, when the vertical wall height H2 of the second member 20 of 30.0 mm is converted to the ratio: H2/H1 of the vertical wall height H2 of the second member 20 of 30.0 mm to the vertical wall height H1 of the first member 10 of 60.0 mm, the ratio: H2/H1 is 1/2, and when the vertical wall height H2 of the second member 20 of 20.0 mm is converted to the ratio: H2/H1 of the vertical wall height H2 of the second member 20 of 20.0 mm to the vertical wall height H1 of the first member 10 of 60.0 mm, the ratio: H2/H1 is 1/3. Accordingly, it can be said that H2/H1 is preferably 1/2 or less, and is more preferably 1/3 or less.

As shown in FIG. 13, in the case in which the vertical wall height H2 was 5.0 mm or less, the maximum load per unit weight and the amount of energy absorption were remarkably lower than those in the case in which the vertical wall height H2 is 10.0 mm or more. Accordingly, in the structural members 100 used in the present example, the vertical wall height H2 of the second member 20 is preferably more than 5.0 mm, and is more preferably 10.0 mm or more. In the present example, the ratio: H2/H1 of the vertical wall height H2 of the second member 20 of 5.0 mm to the vertical wall height H1 of the first member 10 of 60.0 mm is 1/12, and the ratio: H2/H1 of the vertical wall height H2 of the second member 20 of 10.0 mm to the vertical wall height H1 of the first member 10 of 60.0 mm is 1/6. Accordingly, H2/H1 is preferably more than 1/12, and is more preferably 1/6 or more.

### [Fifth example]

A simulation of a three-point bending test substantially the same as that in the second example was performed on structural members 100 by changing the size of a gap G formed between the vertical wall 121 of the first member 10 and the vertical wall 221 of the second member 20 and the size of a gap G formed between the vertical wall 122 of the first member 10 and the vertical wall 222 of the second member 20 from 0 mm to 5.0 mm. The dimensions of the respective components of each structural member 100 other than the gap G, and the material of each structural member 100 are substantially the same as those in the first example.

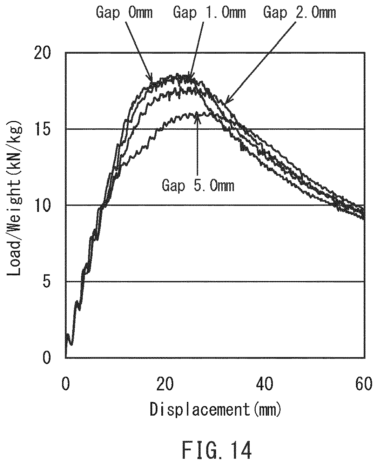

FIG. 14 shows load/weight-displacement curves obtained by performing the simulation of the three-point bending test in the present example. FIG. 14 shows the relationship between a load per unit weight and displacement of the impactor in the respective structural members 100 that differ in the size of the gap G formed between the vertical wall 121 of the first member 10 and the vertical wall 221 of the second member 20 and the size of the gap G formed between the vertical wall 122 of the first member 10 and the vertical wall 222 of the second member 20. As shown in FIG. 14, when the size of the gap G was 0 mm to 2.0 mm, the maximum load per unit weight was substantially the same. However, when the size of the gap G was 5.0 mm, the maximum load decreased slightly. Further, in the case in which the size of the gap G was 5.0 mm, the amount of energy absorption per unit weight was also lower than that in the case in which the size of the gap G was 0 mm to 2.0 mm. Accordingly, it is preferable that the size of the gap G formed between the vertical wall 121 of the first member 10 and the vertical wall 221 of the second member 20 and the size of the gap G formed between the vertical wall 122 of the first member 10 and the vertical wall 222 of the second member 20 be 2.0 mm or less.

### [Sixth example]

A simulation of a three-point bending test substantially the same as that in the second example was performed on structural members 100A (FIG. 3) in which the top plate 21A of the second member 20A includes the protruding portion 212. In the present example, to examine influence of the protruding portion 212 on withstand load performance of the structural member 100A, the width w2 and the height h2 of the protruding portion 212 were changed. The dimensions of the respective components of each structural member 100A other than the protruding portion 212, and the material of each structural member 100A are substantially the same as those in the first example. Conditions of the width w2 and the height h2 of the protruding portion 212 are shown in table 1.

### [Table 1]

**TABLE 1**

| | Width w2 [mm] | Height h2 [mm] | Ratio [%] of width w2 of protruding portion to width W1 of first member | Ratio [%] of height h2 of protruding portion to vertical wall height H2 |
|---|---|---|---|---|
| case 1 | 15 | 16 | 18.8 | 100.0 |
| case 2 | 40 | 16 | 50.0 | 100.0 |
| case 3 | 50 | 16 | 62.5 | 100.0 |
| case 4 | 60 | 16 | 75.0 | 100.0 |
| case 5 | 70 | 16 | 87.5 | 100.0 |
| case 6 | 75 | 16 | 93.8 | 100.0 |
| case 7 | 40 | 14 | 50.0 | 87.5 |
| case 8 | 40 | 12 | 50.0 | 75.0 |
| case 9 | 40 | 8 | 50.0 | 50.0 |
| case 10 | 15 | 8 | 18.8 | 50.0 |

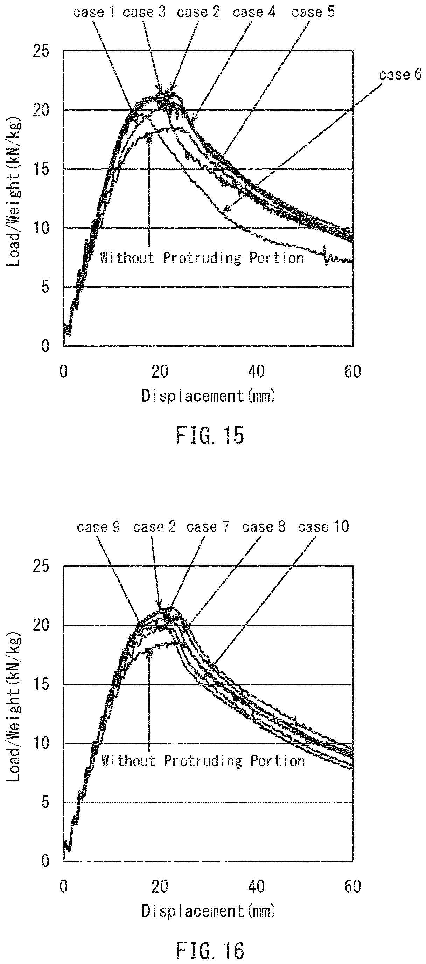

FIG. 15 and FIG. 16 show load/weight-displacement curves obtained by performing the simulation of the three-point bending test in the present example. FIG. 15 and FIG. 16 show the relationship between a load per unit weight and displacement of the impactor in the structural members 100A in case 1 to case 10. For the comparison, FIG. 15 and FIG. 16 also show the relationship between a load per unit weight and displacement of the impactor in the structural member 100 (FIG. 2) in which the top plate 21 of the second member 20 does not include the protruding portion 212.

As shown in FIG. 15 and FIG. 16, in all of cases 1 to 10, the maximum load per unit weight was larger than that in the case in which the top plate 21 of the second member 20 does not include the protruding portion 212. Accordingly, it can be understood that providing the protruding portion 212 to the top plate 21 of the second member 20 can achieve a reduction in weight of the structural member 100A and an increase in withstand load performance against a crash load from the direction of the second member 20.

As shown in FIG. 15, in cases 2 to 5 in which the width w2 of the protruding portion 212 was 40 mm to 70 mm, that is, the ratio of the width w2 of the protruding portion 212 to the width W1 of the first member 10 was 50.0% to 87.5% (1/2 ≤ w2/W1 ≤ 7/8), the maximum load per unit weight that the structural member 100A can bear was relatively large. Accordingly, it is preferable that the ratio: w2/W1 of the width w2 of the protruding portion 212 to the width W1 of the first member 10 be 1/2 or more and 7/8 or less.

As shown in FIG. 16, in cases 2, 7 in which the height h2 of the protruding portion 212 was 14 mm or more, that is, the ratio of the height h2 of the protruding portion 212 to the vertical wall height H2 of the second member 20 was 87.5% or more (h2/H2 ≥ 7/8), the maximum load per unit weight was particularly large. Accordingly, the ratio: h2/H2 of the height h2 of the protruding portion 212 to the vertical wall height H2 of the second member 20 is preferably 7/8 or more.

### [Seventh example]

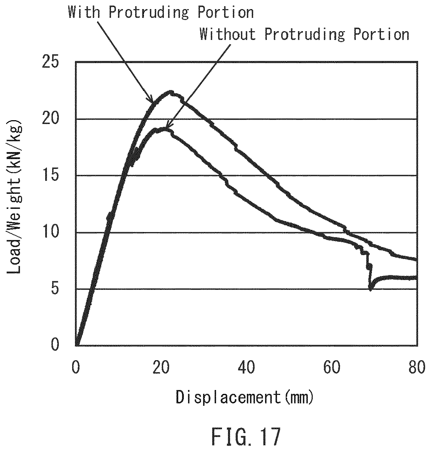

To confirm advantageous effects brought about by a protruding portion 212, a three-point bending test substantially the same as that in the first example was performed on structural members 100, 100A. In this test, the first member 10 was formed of a steel sheet having a sheet thickness of 1.6 mm, and the second member 20 was formed of a steel sheet having a sheet thickness of 1.0 mm. FIG. 17 shows load/weight-displacement curves obtained by performing the three-point bending test in the present example. FIG. 17 shows the relationship between a load per unit weight and displacement of the impactor in the respective structural members 100, 100A.

As shown in FIG. 17, in the structural member 100A in which the protruding portion 212 is provided to a second member 20A, a load per unit weight was remarkably larger than that in the structural member 100 in which the protruding portion 212 is not provided to the second member 20. This is because a top portion 212a of the protruding portion 212 is exposed from resin 30 and hence, the protruding portion 212 receives a crash load, so that the load input to the resin 30 is reduced. In the structural member 100, rupture and separation of the resin 30 occurred before a load reaches the maximum load. In contrast, in the structural member 100A, no rupture and separation of the resin 30 occurred.

It was confirmed from the present example that providing the protruding portion 212 to the second member 20A can suppress rupture and separation of the resin 30 and can cause the structural member 100A to exhibit high withstand load performance. Particularly, in the case in which a large withstand load is required, so that rupture and separation of the resin 30 is liable to occur, it is considered that providing the protruding portion 212 is effective to maintain excellent withstand load performance.

### REFERENCE SIGNS LIST

100, 100A: structural member
10: first member
11: top plate (first top plate)
121, 122: vertical wall (first vertical wall)
131, 132: flange (first flange)
151, 152: ridge portion (first ridge portion)
20, 20A: second member
21, 21A: top plate (second top plate)
212: protruding portion
221, 222: vertical wall (second vertical wall)
231, 232: flange (second flange)
251, 252: ridge portion (second ridge portion)
30: resin

## Claims

1. A structural member for a mobile body having an elongated shape, the structural member comprising:
a first member including a first top plate, a pair of first vertical walls, a pair of first flanges, and a pair of first ridge portions, and extending in a longitudinal direction of the structural member, the first vertical walls being disposed to face each other, end edges of the first vertical walls being connected to each other by the first top plate, the first flanges being disposed opposite to the first top plate with respect to the first vertical walls and protruding outward relative to the first vertical walls, the first ridge portions connecting the first vertical walls and the first flanges;
a second member including a second top plate, a pair of second vertical walls, a pair of second flanges, and a pair of second ridge portions, and extending in the longitudinal direction, the second top plate being disposed inside of the first vertical walls and facing the first top plate with a space between the second top plate and the first top plate, the second vertical walls being disposed along the first vertical walls inside of the first vertical walls, end edges of the second vertical walls being connected to each other by the second top plate, the second flanges being disposed opposite to the second top plate with respect to the second vertical walls, protruding outward relative to the second vertical walls, and being joined to the first flanges, the second ridge portions connecting the second vertical walls and the second flanges; and
resin filled in between the second vertical walls.

2. The structural member according to claim 1, wherein
a size of each gap formed between the first vertical walls and the second vertical walls is 2.0 mm or less.

3. The structural member according to claim 1 or 2, wherein
a filling height of the resin is equal to or higher than positions of ends of the second ridge portions close to the second vertical walls.

4. The structural member according to any one of claims 1 to 3, wherein
the second top plate includes a protruding portion that protrudes in a direction opposite to the first top plate and that extends in the longitudinal direction.

5. The structural member according to claim 4, wherein
assuming a length of the protruding portion as w2 and a distance between the first vertical walls as W1 in a direction in which the first vertical walls face each other, w2/W1 is 1/2 or more and 7/8 or less.

6. The structural member according to any one of claims 1 to 5, wherein
assuming a height of the second vertical walls as H2 and a height of the first vertical walls as H1 in a direction perpendicular to both the longitudinal direction and the direction in which the first vertical walls face each other, H2/H1 is more than 1/12.

7. The structural member according to claim 6, wherein
H2/H1 is 1/2 or less.

8. The structural member according to any one of claims 1 to 7, wherein
the resin is contiguously filled in between the second vertical walls over an overall length of the second member.

9. The structural member according to any one of claims 1 to 7, wherein
the resin is filled in between the second vertical walls at a portion of the second member in the longitudinal direction.
